# EUROPÄISCHE PATENTSCHRIFT

(11) **EP 1 290 663 B1**
(45) Veröffentlichungstag und Bekanntmachung des Hinweises auf die Patenterteilung: **21.01.2004**
(21) Anmeldenummer: 01929318.2
(22) Anmeldetag: 05.04.2001
(51) Int. Cl.: G08C 17/02, G01S 13/02

(54) **SENSOR, SENSORSYSTEM UND VERFAHREN ZUR FERNERFASSUNG EINER MESSGRÖSSE**
SENSOR, SENSOR SYSTEM AND METHOD FOR REMOTELY SENSING A VARIABLE
CAPTEUR, SYSTEME CAPTEUR ET PROCEDE POUR LA DETERMINATION A DISTANCE D'UNE GRANDEUR A MESURER

(30) Priorität: 23.05.2000 DE 10025503
(43) Veröffentlichungstag der Anmeldung: 12.03.2003
(73) Patentinhaber: ROBERT BOSCH GMBH, 70442 Stuttgart (DE)
(72) Erfinder: ELSNER, Bernhard, 65597 Huenfelden (DE); HEIDEMEYER, Henry, 70825 Korntal (DE)
(86) Internationale Anmeldenummer: PCT/DE2001/001324
(87) Internationale Veröffentlichungsnummer: WO 2001/091079

(56) Entgegenhaltungen:
- DE-A- 4 413 211
- DE-A- 19 510 452
- DE-A- 19 851 002
- US-A- 4 069 472
- US-A- 4 090 176

## Beschreibung

Die vorliegende Erfindung betrifft einen Sensor zur Fernerfassung einer Meßgröße, ein Sensorsystem, in dem ein solcher Sensor Anwendung findet, sowie ein Verfahren zur Fernerfassung einer Meßgröße.

### Stand der Technik

Die Fernabfragbarkeit eines Sensors ist in vielen Anwendungsbereichen erforderlich, insbesondere dort, wo es problematisch ist, eine dauerhafte körperliche Verbindung zwischen einem Sensor und einer zugehörigen Auswerteeinheit herzustellen, über die Ausgangssignale des Sensors zu der Auswerteeinheit übertragen werden können. Solche Verbindungsprobleme treten überall dort auf, wo der Sensor relativ zu der zugehörigen Auswerteeinheit bewegt ist, insbesondere bei Drehbewegungen. Als Beispiele hierfür können die Erfassung des Drucks in einem an einem Fahrzeug drehbar montierten Luftreifen oder die Messung des Drehmoments auf einer rotierenden Welle dienen.

Diese Anwendungen erfordern die Übertragung von Ausgangssignalen des Sensors auf elektromagnetischem Wege im allgemeinsten Sinne, d. h. die Übertragung von Funk-, Mikrowellen- oder Lichtsignalen. Eine Möglichkeit hierfür ist, das Sensorelement mit einer eigenen Stromversorgung auszurüsten, um die Energie bereitzustellen, die für die Messung und die Übertragung der Ausgangssignale benötigt wird. Dieses Prinzip stößt jedoch schnell an seine Grenzen durch die entstehenden Kosten (Batterie), das relativ hohe Gewicht der Sensoreinheit und die notwendige Wartung, da ein Tausch der Batterie nach einer bestimmten Betriebszeit notwendig ist.

Es. ist daher wünschenswert, den Sensor vollkommen passiv, d. h., ohne eigene Stromversorgung zu realisieren, um die Probleme im Zusammenhang mit der Batterie zu umgehen und den Sensor kleiner, leichter und unempfindlicher zu machen.

Ein Beispiel für einen auf elektromagnetischem Wege fernabfragbaren Sensor bzw. ein Sensorsystem ist in DE 1 9702 768 C1 behandelt. Der aus dieser Schrift bekannte Sensor umfaßt: einen Resonator, der eine unter dem Einfluß der Meßgröße veränderliche Resonanzfrequenz aufweist, eine Antenne zum Senden und Empfangen eines modulierten Hochfrequenzsignals, und einen Modulator/Demodulator zum Koppeln des ersten Resonators an die Antenne. Um die von diesem bekannten Sensor gemessene Größe fernabzufragen, wird ein Abfrage-Funksignal von einer Abfrageeinheit abgestrahlt, das ein mit einem Abfrage-Meßsignal einer ersten Frequenz moduliertes Abfrage-Trägersignal einer zweiten Frequenz umfaßt. Die Frequenz des Abfrage- Trägersignals liegt im Mikrowellen-Frequenzbereich um 2,4 GHz, die des Abfrage-Meßsignals im Frequenzbereich von 1 bis 30 MHz. Das Abfrage-Funksignal wird von der Antenne des Sensors empfangen und an den Modulator/Demodulator angelegt, dessen Ausgangs-Frequenzspektrum daraufhin einen Anteil mit der ersten Frequenz aufweist. Die erste Frequenz liegt üblicherweise in einem Resonanzbereich des Resonators, so daß dieser bei Empfang des Abfrage-Funksignals zu einer erzwungenen Schwingung angeregt wird, deren Amplitude unter anderem von der Differenz zwischen der ersten Frequenz und der von der Meßgröße abhängigen Resonanzfrequenz des Resonators abhängt. Nachdem der Resonator zum Schwingen angeregt worden ist, wird die Modulation des Abfrage-Funksignals unterbrochen, und es wird das reine, nicht modulierte Abfrage-Trägersignal ausgestrahlt. Dieses mischt im Modulator/Demodulator des Sensors mit der dann freien Schwingung des Resonators auf seiner Resonanzfrequenz, und ein auf diese Weise mit der Resonanzfrequenz moduliertes Trägersignal wird als Antwort-Funksignal an die Abfrageeinheit zurück übertragen. Dort kann durch Auswertung der Modulation des Antwort-Funksignals auf den aktuellen Wert der Meßgröße geschlossen werden.

Dieser bekannte Sensor ist durch ein Abfräge-Funksignal beliebiger Trägerfrequenz anregbar, sofern nur die Modulationsfrequenz nahe genug an der Resonanzfrequenz des Oszillators liegt. Um das Antwort-Funksignal zu empfangen, muß das Abfrage-Trägersignal fortlaufend ausgestrahlt werden. Es ist deshalb nicht möglich, eine gleiche Antenne zum Ausstrahlen des Abfrage-Funksignals und zum Empfangen des Antwort-Funksignals zu verwenden.

### Vorteile der Erfindung

Durch die vorliegende Erfindung wird'ein fernabfragbarer Sensor bzw. ein Sensorsystem mit einer Mehrzahl solcher Sensoren sowie ein Verfahren zur Fernerfassung einer Meßgröße geschaffen, die eine schnellere Abfrage der Meßgröße und den gleichzeitigen Einsatz einer Mehrzahl von Sensoren in einem gleichen Raumbereich ohne die Gefahr einer gegenseitigen Störung oder die Notwendigkeit einer Koordination der Abfragevorgänge der einzelnen Sensoren ermöglichen.

Diese Vorteile werden zum einen dadurch erreicht, daß der Sensor mit einem zweiten, durch eine Trägerfrequenz des Hochfrequenzsignals anregbaren Resonator ausgestattet ist. Dieser Aufbau des Sensors erlaubt es, während eines Zeitraums, in dem von der Abfrageeinheit das modulierte Abfrage-Funksignal ausgestrahlt wird, sowohl den ersten, abstimmbaren Resonator mit dem Abfrage-Meßsignal zur Schwingung anzuregen, als auch den zweiten Resonator mit Hilfe des Abfrage-Trägersignals zur Schwingung anzuregen. Auf diese Weise wird Energie der Trägerschwingung am Sensor gespeichert. Dies hat zum einen die Folge, daß man zum Erzeugen des Antwort-Funksignals nicht mehr auf die gleichzeitige Sendung des Abfrage-Trägersignals angewiesen ist, weil das benötigte Antwort-Funksignal auf seiten des Sensors durch Misehen der Signale der zwei Resonatoren am Modulator/Demodulator erzeugt werden kann. Dieses Antwort-Funksignal kann an der Abfrageeinheit empfangen und ausgewertet werden, sobald nach Unterbrechung der Ausstrahlung des Abfrage-Funksignals dessen Echos abgeklungen sind

Da das Vorhandensein des zweiten Resonators es ermöglicht, die Ausstrahlung des Abfrage-Trägersignals zu unterbrechen, wenn das Antwort-Funksignal empfangen werden soll, kann auf seiten der Abfrageeinheit eine gleiche Antenne zum Senden des Abfrage-Funksignals und zum Empfang des Antwort-Funksignals eingesetzt werden. Außerdem ist es möglich, in einer Umgebung, in der einer Mehrzahl von Abfrageeinheiten jeweils wenigstens ein Sensor zugeordnet ist, jeder Abfrageeinheit und den ihr zugehörigen Sensoren eine spezifische erste Trägerfrequenz zuzuordnen, die es den Abfrageeinheiten ermöglicht, selektiv nur die ihnen zugeordneten Sensoren anzusprechen und abzufragen.

Der Sensor ist vorzugsweise ein rein passives Element ohne eigene Stromversorgung. Daher ist als Modulator/Demodulator insbesondere eine Detektordiode (Schottky-Diode oder Varaktor) geeignet. Diese Bauelemente erzeugen durch ihre bereits in der Umgebung der Nullspannung stark nichtlineare Kennlinie eine starke Kopplung der unterschiedlichen spektralen Komponenten eines angelegten Signals und begünstigen so die Entstehung von Differenz- oder Summenfrequenzen.

Als erster Resonator sind Oberflächenwellenresonatoren oder Schwingquarze geeignet. Derartige Resonatoren werden nicht direkt in ihrem Verhalten durch die zu erfassende Größe beeinflußt, sondern werden zweckmäßigerweise in einem Schwingkreis zusammen mit einem für die zu erfassende Größe empfindlichen Bauelement-eingesetzt. Dies erlaubt es, für die Resonatoren preiswerte Standardbauelemente zu verwenden.

Als für die Meßgröße empfindliches Element wird vorzugsweise ein Widerstandselement mit unter dem Einfluß der Meßgröße veränderbaren Widerstandswert eingesetzt. Bevorzugte Meßgrößen sind zum Beispiel der Druck oder die Temperatur.

Um zu vermeiden, daß das Funk-Antwortsignal durch die Dämpfung der Schwingung des von der Meßgröße unbeeinflußten zweiten Oszillators zu stark verfälscht wird, ist dieser zweckmäßigerweise so konstruiert, daß er eine geringere Dämpfung als der erste Resonator aufweist, so daß im Idealfalle sogar die Schwingung des zweiten Resonators als während der Meßzeit gleichbleibend aufgefaßt werden kann.

Als zweiter Resonator sind insbesondere Oberflächenwellenresonatoren geeignet, die in der Lage sind, in Reaktion auf einen Anregungs-Schwingungspuls einen zeitlich verzögerten Ausgangs-Schwingungspuls zu erzeugen. Solche Resonatoren können zum Beispiel als Oberflächenwellen-Filter mit einem ersten Elektrodenpaar zur Anregung der Oberflächenwelle und einem räumlich beanstandeten zweiten Elektrodenpaar zum Abgreifen der Oberflächenwelle oder als Resonator mit einem einzigen Elektrodenpaar, das sowohl zum Anregen als auch zum Abgreifen der Oberflächenwelle dient, ausgebildet sein, wobei jeweils Reflektorelektroden in einem Abstand von dem Elektrodenpaar angeordnet sind, um die sich im Substrat des Resonators ausbreitende Oberflächenwelle mit einer Zeitverzögerung zu dem Elektrodenpaar zu reflektieren.

Bei der Fernerfassung einer Meßgröße unter Verwendung eines Sensors der oben beschriebenen Art werden zunächst dessen zwei Oszillatoren durch ein Abfrage-Funksignal angeregt, das ein mit einem Abfrage-Meßsignal einer ersten Frequenz moduliertes Abfrage-Trägersignal bei einer zweiten Frequenz umfaßt. Um eine Fernabfrage durchzuführen, wird die Ausstrahlung des gesamten Abfrage-Funksignals, des Trägers wie auch der Modulation, unterbrochen, und ein von dem Sensor abgestrahltes Antwort-Funksignal wird aufgefangen, das ein Antwort-Trägersignal bei der Resonanzfrequenz des zweiten Oszillators, moduliert mit einem Antwort-Meßsignal bei der Resonanzfrequenz des ersten Oszillators umfaßt. Da in dieser Zeit kein Abfrage-Trägersignal ausgestrahlt wird, ist der Untergrund, aus dem das Antwort-Funksignal isoliert werden muß, gering, so daß geringe Empfangsstärken für eine befriedigende Messung ausreichend sind.

Da in der Zeit, in der das Antwort-Funksignal aufgefangen wird, kein Abfrage-Funksignal ausgestrahlt wird, kann die gleiche Antenne zum Senden des Abfrage-Funksignals als auch zum Empfang des Antwort-Funksignals eingesetzt werden, ohne daß die Gefahr eines Übersprechens von der Abfrage zum Empfang besteht.

Wenn der zweite Resonator einen gegenüber der Anregung zeitlich verzögerten Schwingungspuls liefert, ist es zweckmäßig, das Zeitintervall, in dem das Abfrage-Funksignal ausgestrahlt wird, kürzer als die Zeitverzögerung des zweiten Resonators zu wählen. Dies führt nämlich dazu, daß der Sensor erst mit einer Verzögerung nach Ende des Abfrage-Funksignals beginnt, das Antwort-Funksignal auszustrahlen.

Diese Verzögerung ist voteilhafterweise so gewählt, daß Echos des Abfrage-Funksignals abgeklungen sind, bevor das Antwort-Funksignal an der Abfrageeinheit eintrifft.

Weitere Merkmale und Vorteile der Erfindung ergeben sich aus der nachfolgenden Beschreibung eines Ausführungsbeispiels mit Bezug auf die beigefügten Figuren.

### Figuren

Es zeigen:
Figur 1 ein Blockdiagramm eines erfindungsgemäßen Sensors;
Figur 2 ein Blockdiagramm einer Abfrageeinheit für den Sensor aus Figur 1;
Figur 3 den zeitlichen Verlauf der Intensitäten der Funksignale an der Antenne der Abfrageeinheit;.
Figuren 4 und 5 Beispiele für den Aufbau eines Oberflächenwellenresonators, der als zweiter Resonator eines erfindungsgemäßen Sensors geeignet ist; und
Figur 6 den zeitlichen Verlauf der Intensitäten der Funksignale an der Antenne der Abfrageeinheit bei Verwendung eines zweiten Resonators gemäß Figur 4 oder 5.

### Beschreibung der Ausführungsbeispiele

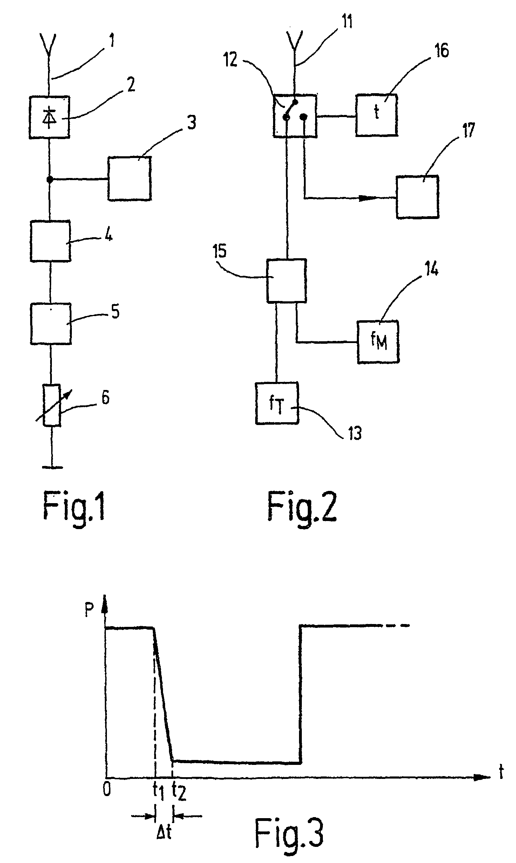

Ein erfindungsgemäßes Sensorsystem für die Fernabfrage einer Meßgröße besteht aus einer Abfrageeinheit, wie in Figur 2 gezeigt, und einem oder mehreren Sensoren, wie in Figur 1 gezeigt. In der Abfrageeinheit. befindet sich ein Oszillator 13, der ein Signal, hier als Abfrage-Trägersignal bezeichnet, mit einer Trägerfrequenz f_{T} im Bereich von 2,54 GHz erzeugt. Die Trägerfrequenz ist vorzugsweise um einige MHz gezielt variierbar. Ein zweiter Oszillator 14 erzeugt ein Abfrage-Meßsignal in Form einer Schwingung mit einer Frequenz f_{M} im Bereich von 0 bis 80 MHz. Wenn die Abfrageinheit zum Abfragen mehrerer Sensoren eingesetzt wird, ist die Meßfrequenz f_{M} zweckmäßigerweise ebenfalls gezielt variierbar, und zwar in Schritten, die der Größe des Resonanzbereichs eines ersten Resonators der Sensoren entsprechen, auf den an späterer Stelle noch eingegangen wird.

Ein Modulator 15 ist an die zwei Oszillatoren 13, 14 angeschlossen und moduliert das Abfrage-Meßsignal auf das Abfrage-Trägersignal auf und erzeugt so ein Abfrage-Funksignal, das an einen Schalter 12 ausgegeben wird. Der Schalter 12 steht unter der Kontrolle eines Zeitgebers 16, der eine Sende-Empfangsantenne 11 abwechselnd mit dem Ausgang des Modulators 15 und dem Eingang einer Demodulations- und Meßschaltung verbindet. Die vom Modulator 15 ausgeführte Modulation kann insbesondere eine Amplitudenmodulation oder eine Quadraturmodulation sein; die in der Demodulations- und Meßschaltung stattfindende Demodulation ist komplementär dazu.

Das von der Antenne 11 abgestrahlte Abfrage-Funksignal wird von einer Antenne 1 des in Figur 1 gezeigten Sensors empfangen. An die Antenne ist eine Demadulationsdiode 2, zum Beispiel eine Schottky- oder Detektordiode angeschlossen. Eine solche Diode zeichnet sich durch eine bereits in der Nähe des Koordinatenursprungs im wesentlichen parabelförmige Kennlinie und damit durch ein stark nichtlineares Verhalten aus, das zu einer Mischung der im Abfrage-Funksignal enthaltenen Spektralanteile und damit zur Erzeugung einer spektralen Komponente mit der Frequenz f_{M} des Meßsignals am Ausgang der Demodulationsdiode 2 führt. Der ebenfalls am Ausgang der Demodulationsdiode 2 erscheinende spektrale Anteil mit der Trägerfrequenz f_{T} dient zur. Anregung eines Resonators 3, hier als zweiter Resonator bezeichnet.

An den Ausgang der Demodulationsdiode 2 ist ferner ein Tiefpaßfilter 4 und, hinter dem Tiefpaßfilter 4 ein sogenannter erster Resonator 5 angeschlossen, der zusammen mit einem für die Meßgröße sensitiven Element 6 einen Schwingkreis bildet. Der erste Resonator 5 ist genauso wie der zweite Resonator 3 ein kommerziell verfügbares Bauelement, zum Beispiel ein Schwingquarz oder ein Oberflächenwellenresonator. Durch die Zusammenschaltung mit dem sensitiven Element 6 ist die Resonanzfrequenz des ersten Resonators 5 in Abhängigkeit von der Meßgröße variabel.

Der Zweck des Tiefpaßfilters 4 liegt im wesentlichen darin, spektrale Anteile im Bereich der Trägerfrequenz f_{T} von dem ersten Resonator 5 fernzuhalten und deren Dissipation im ersten Resonator 5 so zu verhindern. Auf diese Weise bewirkt der Tiefpaßfilter 4 zum einen eine effektivere Anregung des zweiten Resonators 3, solange das Abfrage-Funksignal von der Antenne 1 empfangen wird; wenn das Abfrage-Funksignal pausiert, begrenzt der Tiefpaßfilter 4 die Dämpfung des zweiten Resonators 3.

Das sensitive Element 6 kann ein resistives Element sein, zum Beispiel ein temperaturabhängiger Widerstand, wenn die Meßgröße die Temperatur ist. Ein solches resistives Element beeinflußt sowohl die Resonanzfrequenz als auch die Zeitkonstante des ersten Resonators 5. Es kann auch ein kapazitives Element sein, zum Beispiel ein mikromechanischer Drucksensor, mit zwei relativ zueinander in Abhängigkeit vom herrschenden Druck beweglichen Kondensatorplatten. Ein solches kapazitives Element beeinflußt im wesentlichen nur die Resonanzfrequenz, nicht aber die Dämpfung des ersten Resonators 5.

Figur 3 veranschaulicht schematisch den Verlauf der Empfangsfeldstärke P an der Antenne 11 der Abfrageeinheit als Funktion der Zeit t im Laufe eines Abfragezyklus. Die Empfangsfeldstärke P ist mit einem logarithmischen Maßstab aufgetragen. Während eines Zeitraums t = 0 bis t = t₁ wird das Abfrage-Funksignal ausgestrahlt, es ist somit zwangsläufig um Größenordnungen stärker als aus der Umgebung der Abfrageeinheit zurückgeworfene Echosignale oder ein eventuell von einem Sensor geliefertes Antwortsignal.

Am Zeitpunkt t₁ verbindet der Schalter 12 die Antenne 11 mit der Demodulations- und Meßschaltung 17, und die Austrahlung des Abfrage-Funksignals wird unterbrochen. Während eines kurzen Zeitraums [t₁, t₂] treffen an der Antenne 11 Echos des Abfrage-Funksignals ein, die von Hindernissen in unterschiedlichen Abständen in der Umgebung der Antenne 11 zurückgeworfen werden.

Nachdem diese Echosignale abgeklungen sind, trifft an der'Antenne 11 nur noch ein Antwort-Funksignal ein, das im Sensor durch Mischen der Schwingungen der zwei Resonatoren 3, 5 in der jetzt als Modulator fungierenden Diode 2 erzeugt worden und über die Antenne 1 abgestrahlt worden sind. Die Demodulations-Meßschaltung 17 wartet daher nach dem Umschalten des Schalters 12 noch eine vorgegebene Zeitspanne Δt ab, bevor sie beginnt, das von der Antenne 11 empfangene Antwortsignal auf Frequenz und/oder Dämpfung zu untersuchen und so die darin enthaltene Information über die Meßgröße zu extrahieren.

Die Verzögerung Δt kann in Abhängigkeit von der Sende- und Empfangsleistung der Abfrageeinheit fest vorgegeben sein, zum Beispiel in dem Sinne, daß für eine gegebene Bauart der Abfrageeinheit eine maximale Reichweite bestimmt wird, aus der Echosignale noch durch die Abfrageeinheit nachweisbar sind, und die Verzögerung Δt wenigstens gleich dem Zweifachen der Laufzeit gewählt wird, die dieser Reichweite entspricht.

Da während der Verzögerungszeit Δt aber auch die Schwingungen der Resonatoren 3 und 5 abklingen, ist es vorteilhafter, die Verzögerungszeit Δt in Abhängigkeit von der jeweiligen Einsatzumgebung der Abfrageeinheit so kurz wie möglich zu wählen, indem zum Beispiel für eine konkrete Einsatzumgebung die maximale Entfernung einer potentiellen Echoquelle von der Abfrageeinheit bestimmt wird und die Verzögerung wenigstens gleich der zweifachen Signallaufzeit vom Sensorelement zur Abfrageeinheit und damit gerade so groß gewählt wird, daß ein Echo von dieser Quelle nicht ausgewertet wird.

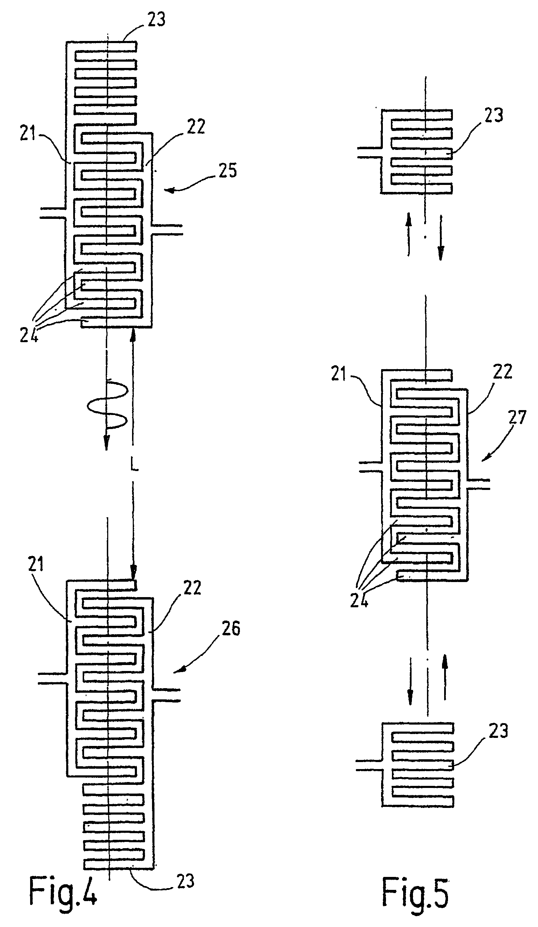

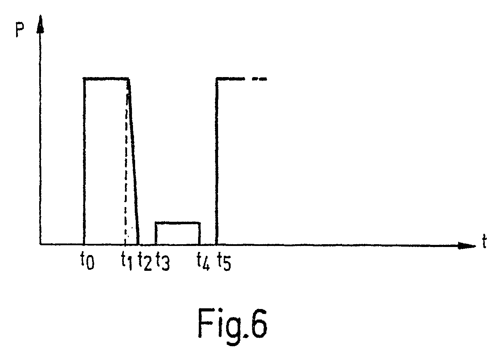

Figuren 4 und 5 zeigen zwei Ausführungsbeispiele für Oberflächenwellenresonatoren, die gemäß einer bevorzugten Weiterentwicklung als erster Resonator 3 eines Sensors wie in Figur 1 gezeigt eingesetzt werden können.

Der grundsätzliche Aufbau einer Struktur zum Anregen und Abgreifen von Oberflächenschwingungen an einem Substrat mit Hilfe von zwei auf dessen Oberfläche abgeschiedenen Elektroden 21, 22 mit einer Vielzahl von kammartig ineinander greifendenden parallelen Fingern 24 ist bekannt und braucht hier nicht im Detail erläutert zu werden.

Der in Figur 4 gezeigte Resonator umfaßt zwei Paare 25, 26 solcher Elektroden 21, 22, von denen jeweils ein Paar 25 bzw. 26 als Sender zum Anregen einer Oberflächenschwingung und das andere Paar 26 bzw. 25 als Empfänger zum Abgreifen der Schwingung dienen kann. Von den zwei Elektroden jedes Paares 25, 26 ist eine an der von dem gegenüberliegendem Paar 26, 25 abgewandten Seite mit einer Reflektorstruktur 23 versehen, die die Ausbreitung der Oberflächenwelle verhindert. Die beiden Paare 25, 26 sind durch einen Abstand L von einander getrennt, der dazu führt, daß eine von einem Paar angeregte Schwingung mit einer Verzögerung τ ≈ c/L das andere 'Paar erreicht und dort abgegriffen werden kann.

Der in Figur 5 gezeigte Oberflächenwellenresonator umfaßt nur ein Elektrodenpaar 27 mit Elektroden 21, 22, die jeweils in beide zu den Elektrodenfingern 24 senkrechten Richtungen ausstrahlen. In einem Abstand L/2 von dem Elektrodenpaar 27 sind Reflektorstrukturen 23 angeordnet, die eine von dem Elektrodenpaar 27 ausgesandte Oberflächenwelle in sich zurück reflektieren. Die reflektierte Oberflächenwelle erreicht somit mit der gleichen Verzögerung τ ≈ c/L wie im Fall der Figur 4 wieder das Elektrodenpaar 27 und kann dort abgegriffen werden.

Figur 6 ist eine schematische Darstellung des Verlaufs der Empfangsfeldstärke P an der Antenne 11 der Abfrageeinheit als Funktion der Zeit t im Laufe eines Abfragezyklus, der sich ergibt, wenn ein Oberflächenwellenresonator der in Figur 4 oder 5 dargestellten Bauart als zweiter Resonator des Sensors eingesetzt wird.

Während eines Zeitraums t = t₀ bis t = t₁ wird das Abfrage-Funksignal ausgestrahlt, genauso wie im Falle der Figur 3. Am Zeitpunkt t₁ wird die Ausstrahlung des Abfrage-Funksignals unterbrochen; die Empfangsfeldstärke P an'der Antenne 11 nimmt in dem Maße ab, wie aus der Umgebung der Antenne 11 zurückgeworfene Echos des Abfrage-Funksignals abklingen.

Zum Zeitpunkt t₃ = t₀ + τ (unter Vernachlässigung von Signallaufzeiten zwischen Abfrageeinheit und Sensor) beginnt die Oberflächenwelle, die in dem zweiten Resonator 3 während des Empfangs des Abfrage-Funksignals durch den Sensor angeregt worden ist, das Elektrodenpaar zu erreichen, an dem sie abgegriffen wird, so daß ab dem Zeitpunkt t₃ ein moduliertes Antwort-Funksignal am Sensor erzeugt wird. Indem die Ausdehnung des zweiten Resonators 3 bzw. die Verzögerung τ innerhalb dieses Resonators 3 groß genug gewählt wird, kann erreicht werden, daß zwischen dem Abklingen der Echos zum Zeitpunkt t₂ und dem Eintreffen des Antwort-Funksignals zum Zeitpunkt t₃ eine Empfangspause mit vernachlässigbarer Empfangsfeldstärke liegt, die durch die Demodulations- und Meßschaltung der Abfrageeinheit erfaßbar ist und es dieser erlaubt, eindeutig zwischen Echo und Antwort-Funksignal zu unterscheiden. Zum Zeitpunkt t₄ = t₁ + τ hat die Oberflächenwellenschwingung das abgreifende Elektrodenpaar vollständig durchquert, und die Erzeugung des Antwort-Funksignals bricht ab.

Nach einer kurzen weiteren Verzögerung, zum Zeitpunkt t₅, beginnt mit der erneuten Ausstrahlung des Abfrage-Funksignals ein neuer Arbeitszyklus der Abfrageeinheit des Sensors.

Üblicherweise ist die Meßfrequenz des Abfrage-Meßsignals so gewählt, daß damit eine Anregung des ersten Resonators 5 möglich ist. Es kann allerdings vorkommen, daß in Folge einer starken Änderung der Meßgröße die dadurch beeinflußte Resonanzfrequenz des ersten Resonators 5 so stark verändert ist, daß eine wirksame Anregung des ersten Resonators mit der Frequenz des Abfrage-Meßsignals nicht mehr möglich ist. In diesem Fall kann das Antwort-Funksignal nicht oder nicht mit einer Stärke moduliert werden, die ausreicht, um aus dem an der Abfrageeinheit empfangenen Signal die Meßgröße zu gewinnen. Deshalb ist gemäß einer bevorzugten Weiterentwicklung des Fernabfragesystems vorgesehen, daß die Frequenz des Oszillators 14, das heißt die Meßfrequenz f_{M}, gezielt veränderbar ist, und daß die Abfragestation diese Frequenz f_{M} ändert, wenn ein unbrauchbares Antwort-Funksignal empfangen wird, das heißt wenn ein Antwort-Funksignal empfangen wird, dessen Qualität nicht ausreicht, um daraus in der Demodulations- und Meßschaltung die Meßgröße zu ermitteln.

Eine solche Änderung der Meßfrequenz kann jeweils iterativ ausgehend von demjenigen Wert f_{M}* der Meßfrequenz f_{M} erfolgen, bei dem zum letzten Mal ein brauchbares Antwort- Funksignal empfangen worden ist. Eine mögliche Vorgehensweise hierbei ist zum Beispiel, daß die Umgebung dieser letzten brauchbaren Meßfrequenz f_{M}* von kleineren zu größeren Abweichungen von dieser Meßfrequenz f_{M}* fortschreitend abwechselnd oberhalb bzw. unterhalb. der Meßfrequenz f_{M}* abgesucht wird. Denkbar ist auch, daß anhand von zwei zuvor verwendeten Meßfrequenzen eine Tendenz der Veränderung der Resonanzfrequenz des. ersten Resonators 5 ermittelt wird, und daß in der durch diese Tendenz angegebenen Richtung über mehrere Schritte hinweg gesucht wird, bevor mit dem Suchen in Gegenrichtung begonnen wird. Welche dieser Suchstrategien effektiver ist, kann von der jeweiligen konkreten Einsatzumgebung des Systems abhängen.

Der erste Resonator ist unter dem Einfluß der Meßgröße in einem Frequenzbereich abstimmbar, dessen Breite typischerweise 4 MHz beträgt. Die Grenzen des Abstimmbereichs sind Grenzen, die auch bei dem oben erläuterten Suchverfahren nicht überschritten werden.

Zu Störungen beim Empfang des Antwort-Funksignals kann es auch dann kommen, wenn mehrere Abfrageeinheiten, die gleiche Frequenzen verwenden, miteinander interferieren. Bei der gezielten Konstruktion eines Sensorsystems mit mehreren Abfrageeinheiten kann dieses Problem dadurch vermieden werden, daß jeder Abfrageeinheit und den ihr zugeordneten Sensoren jeweils eine spezifische, für die Abfrageeinheit charakteristische Trägerfrequenz f_{T} zugewiesen wird. Dadurch ist gewährleistet, daß jede Abfrageeinheit nur die zweiten Resonatoren 3 der ihr zugeordneten Sensoren anregt, so daß diese auch nur dann ein Antwort-Funksignal an ihre Abfrageeinheit erzeugen können, wenn sie von dieser angeregt worden sind. Von anderen Abfrageeinheiten ausgestrahlte Abfrage-Funksignale können zwar eventuell den ersten Resonator 5 anregen, wenn die Modulationsfrequenz f_{M} dieser Abfrage-Funksignale mit der Resonanzfrequenz des Resonators 5 übereinstimmt; da der zweite Resonator 3 nicht angeregt wird, kann kein Antwort-Funksignal entstehen.

Bei Verwendung der zweiten Resonatoren gemäß Figur 4 oder 5, die das Antwort-Trägersignal erst mit Zeitverzögerung τ liefern, kann Selektivität bei der Abfrage zusätzlich auch dadurch erreicht werden, daß Sensoren mit unterschiedlichen Verzögerungszeiten τ eingesetzt werden. So kann zum Beispiel einer Abfrageeinheit eine Verzögerung τ fest zugeordnet sein, so daß sie Antwort-Funksignale von Sensoren, die die gleichen Träger- und Meßfrequenzen wie das von ihr abgestrahlte Abfrage-Funksignal aufweisen, nicht erfaßt, weil deren Antwort-Funksignale nicht in das von der Verzögerung τ abhängige Zeitfenster fallen, innerhalb dessen die Abfrageeinheit die eintreffenden Funksignale auswertet.

Es ist auch möglich, einer Abfrageeinheit mehrere Sensoren zuzuordnen, die gleiche Träger- und Meßfrequenzen, aber unterschiedliche Verzögerungen τ aufweisen. Alle diese Sensoren können mit einem einzigen Puls des Abfrage-Funksignals angeregt werden, aber die von ihnen gelieferten Antwort-Funksignale treffen nacheinander und zeitlich voneinander getrennt an der Abfrageeinheit ein, so daß die Demodulations- und Meßschaltung die diversen Antwort-Funksignale den einzelnen angeregten Sensoren bzw. den von ihnen überwachten Größen anhand der Zeit, zu der sie eintreffen, zuordnen kann.

## Patentansprüche

1. Sensor zur Fernerfassung einer Meßgröße, mit einem ersten Resonator (5), der eine unter dem Einfluß der Meßgröße veränderliche Resonanzfrequenz aufweist, einer Antenne (1) zum Senden und Empfangen eines modulierten Hochfrequenzsignals und einem Modulator/Demodulator (2) zum Koppeln des ersten Resonators (5) an die Antenne (1), **dadurch gekennzeichnet, daß** er einen zweiten, durch eine Trägerfrequenz des Hochfrequenzsignals anregbaren Resonator (3) umfaßt.

2. Sensor nach Anspruch 1, **dadurch gekennzeichnet, daß** der Modulator (2) eine Demodulationsdiode, zum Beispiel eine Schottky- oder Detektordiode ist.

3. Sensor nach einem der vorhergehenden Ansprüche, **dadurch gekennzeichnet, daß** der erste Resonator (5) einen Oberflächenwellenresonator oder einen Schwingquarz umfaßt.

4. Sensor nach Anspruch 3, **dadurch gekennzeichnet, daß** der erste Resonator (5) ferner ein für die Meßgröße sensitives diskretes Bauelement (6) umfaßt.

5. Sensor nach einem der vorhergehenden Ansprüche, **dadurch gekennzeichnet, daß** die Meßgröße ein Druck oder eine Temperatur ist.

6. Sensor nach einem der vorhergehenden Ansprüche, **dadurch gekennzeichnet, daß** die Dämpfung des zweiten Resonators (3) geringer ist als die des ersten (5).

7. Sensor nach einem der vorhergehenden Ansprüche, **dadurch gekennzeichnet, daß** der zweite Resonator (3) ein Oberflächenwellenresonator ist, der in der Lage ist, in Reaktion auf einen Anregungs-Schwingungspuls einen zeitlich verzögerten Ausgangs-Schwingungspuls zu erzeugen.

8. Sensor nach Anspruch 7, **dadurch gekennzeichnet, daß** der zweite Resonator zwei räumlich beabstandete Paare (25,26) von Elektroden (21, 22) aufweist.

9. Sensor nach Anspruch 7, **dadurch gekennzeichnet, daß** der zweite Resonator (5) ein Paar (27) von Elektroden (21,22) zum Anregen und Abgreifen einer Oberflächenwelle und von dem Elektrodenpaar (27) beabstandet angeordnete Reflektorelektroden (23) aufweist.

10. Sensorsystem mit einer Mehrzahl von Sensoren nach einem der vorhergehenden Ansprüche, wenigstens einer Abfrageeinheit zum Senden eines Abfrage-Funksignals an die Sensoren und zum Empfangen eines Antwort-Funksignals von den Sensoren, **dadurch gekennzeichnet, daß** die ersten Resonatoren (5) jeweils unterschiedliche Resonanzfrequenzbereiche aufweisen.

11. Sensorsystem nach Anspruch 10, **dadurch gekennzeichnet, daß** jeder Abfrageeinheit eine erste spezifische Trägerfrequenz (f_{T}) des Abfrage-Funksignals und wenigstens ein Sensor zugeordnet ist, dessen zweiter Resonator (5) selektiv durch die spezifische Trägerfrequenz (f_{T}) anregbar ist.

12. Abfrageeinheit für einen Sensor nach einem der Ansprüche 1 bis 9 oder ein Sensorsystem nach Anspruch 10 oder 11, **dadurch gekennzeichnet, daß** sie Oszillatoren (13, 14) zum Erzeugen eines Abfrage-Funksignals, das ein mit einem Abfrage-Meßsignal einer ersten Frequenz (f_{M}) moduliertes Abfrage-Trägersignal bei einer zweiten Frequenz (f_{T}) umfaßt, und eine gemeinsame Antenne (11) zum Ausstrahlen des Abfrage-Funksignals und zum Empfangen eines Antwort-Funksignals von einem der Sensoren aufweist, wobei die Abfrageeinheit die Ausstrahlung des Abfrage-Funksignals unterbricht, um das Antwort-Funksignal zu empfangen.

13. Abfrageeinheit nach Anspruch 12, **dadurch gekennzeichnet, daß** die Frequenz des Abfrage-Trägersignals (f_{T}) variierbar ist.

14. Verfahren zur Fernerfassung einer Meßgröße unter Verwendung des sensors nach einem der Ansprüche 1 bis 9 oder des Sensorsystems nach Anspruch 10 oder 11, bei dem die zwei Oszillatoren (3, 5) eines Sensors durch ein Abfrage-Funksignal angeregt werden, das ein mit einem Abfrage-Meßsignal einer ersten Frequenz (f_{M}) moduliertes Abfrage-Trägersignal bei einer zweiten Frequenz (f_{T}) umfaßt, und ein vom Sensor ausgestrahltes Antwort-Funksignal empfangen und ausgewertet wird, das ein Antwort-Trägersignal bei der Resonanzfrequenz des zweiten Oszillators (3), moduliert mit einem Antwort-Meßsignal bei der Resonanzfrequenz des ersten Oszillators (5) umfaßt, wobei für den Empfang des Antwort-Funksignals das Senden des Abfrage-Trägersignals unterbrochen wird.

15. Verfahren nach Anspruch 14, **dadurch gekennzeichnet, daß** das Abfrage-Funksignal und das Antwort-Meßsignal über eine gleiche Antenne (11) gesendet bzw. empfangen werden.

16. Verfahren nach Anspruch 14 oder 15, **dadurch gekennzeichnet, daß** wenn kein ausreichendes Antwort-Meßsignal empfangen wird, die Frequenz des Abfrage-Meßsignals geändert wird.

## Claims

1. Sensor for remote detection of a measurement variable, having a first resonator (5) which has a resonant frequency which can be varied under the influence of the measurement variable, having an antenna (1) for transmitting and receiving a modulated radio-frequency signal, and having a modulator/demodulator (2) for coupling of the first resonator (5) to the antenna (1), **characterized in that** the sensor has a second resonator (3) which can be excited by a carrier frequency of the radio-frequency signal.

2. Sensor according to Claim 1, **characterized in that** the modulator (2) is a demodulation diode, for example a Schottky or detector diode.

3. Sensor according to one of the preceding claims, **characterized in that** the first resonator (5) has a surface acoustic wave resonator or an oscillating crystal.

4. Sensor according to Claim 3, **characterized in that** the first resonator (5) also has a discrete component (6) which is sensitive to the measurement variable.

5. Sensor according to one of the preceding claims, **characterized in that** the measurement variable is a pressure or a temperature.

6. Sensor according to one of the preceding claims, **characterized in that** the attenuation of the second resonator (3) is less than that of the first (5).

7. Sensor according to one of the preceding claims, **characterized in that** the second resonator (3) is a surface acoustic wave resonator which is able to produce a time-delayed output oscillation pulse as a reaction to an excitation oscillation pulse.

8. Sensor according to Claim 7, **characterized in that** the second resonator has two pairs (25, 26) of electrodes (21, 22) which are physically at a distance from one another.

9. Sensor according to Claim 7, **characterized in that** the second resonator (5) has a pair (27) of electrodes (21, 22) for exciting and tapping off a surface acoustic wave, and reflector electrodes (23) which are arranged at a distance from the electrode pair (27).

10. Sensor system having two or more sensors according to one of the preceding claims, at least one checking unit for sending a checking radio signal to the sensors and for receiving a response radio signal from the sensors, **characterized in that** the first resonators (5) each have different resonant frequency ranges.

11. Sensor system according to Claim 10, **characterized in that** each checking unit is allocated a first specific carrier frequency (f_{T}) for the checking radio signal and at least one sensor, whose second resonator (5) can be excited selectively by the specific carrier frequency (f_{T}).

12. Checking unit for a sensor according to one of Claims 1 to 9 or a sensor system according to Claim 10 or 11, **characterized in that** the checking unit has oscillators (13, 14) for producing a checking radio signal, which is in the form of a checking carrier signal (which is modulated with a checking measurement signal at a first frequency (f_{M})) at a second frequency (f_{T}), and has a common antenna (11) for transmitting the checking radio signal and for receiving a response radio signal from one of the sensors, with the checking unit interrupting the transmission of the checking radio signal in order to receive the response radio signal.

13. Checking unit according to Claim 12, **characterized in that** the frequency of the checking carrier signal (f_{T}) is variable.

14. Method for remote detection of a measurement variable using the sensor according to one of Claims 1 to 9 or the sensor system according to Claim 10 or 11, in which the two oscillators (3, 5) of a sensor are excited by a checking radio signal which is in the form of a checking carrier signal (which is modulated with a checking measurement signal at a first frequency (f_{M})) at a second frequency (F_{T}), and a response radio signal which is transmitted by the sensor is received and evaluated, which is based on a response carrier signal at the same resonant frequency as the second oscillator (3), modulated with a response measurement signal at the resonant frequency of the first oscillator (5), with the transmission of the checking carrier signal being interrupted in order to receive the response radio signal.

15. Method according to Claim 14, **characterized in that** the checking radio signal and the response measurement signal are sent and received via the same antenna (11).

16. Method according to Claim 14 or 15, **characterized in that**, if no adequate response measurement signal is received, the frequency of the checking measurement signal is changed.

## Revendications

1. Capteur pour enregistrer à distance une grandeur mesurée comportant un premier résonateur (5) qui présente une fréquence de résonance modifiable sous l'effet de la grandeur mesurée, une antenne (1) destinée à envoyer et à recevoir un signal haute fréquence modulé et un modulateur/démodulateur (2) destiné à coupler le premier résonateur (5) à l'antenne (1), **caractérisé en ce qu'**il comprend un deuxième résonateur (3) qui peut être excité par une fréquence porteuse du signal haute fréquence.

2. Capteur selon la revendication 1,
**caractérisé en ce que**
le modulateur (2) est une diode de démodulation, par exemple une diode à barrière de Schottky ou une diode de détection.

3. Capteur selon l'une des revendications précédentes,
**caractérisé en ce que**
le premier résonateur (5) comprend un résonateur d'onde de surface ou un cristal oscillant.

4. Capteur selon la revendication 3,
**caractérisé en ce que**
le premier résonateur (5) comprend en outre un composant discret (6) sensible à la grandeur mesurée.

5. Capteur selon l'une des revendications précédentes,
**caractérisé en ce que**
la grandeur mesurée est une pression ou une température.

6. Capteur selon l'une des revendications précédentes,
**caractérisé en ce que**
l'amortissement du deuxième résonateur (3) est plus faible que celui du premier (5).

7. Capteur selon l'une des revendications précédentes,
**caractérisé en ce que**
le deuxième résonateur (3) est un résonateur d'onde de surface qui est en mesure de produire, en réaction à une impulsion d'oscillation d'excitation, une impulsion d'oscillation de sortie retardée dans le temps.

8. Capteur selon la revendication 7,
**caractérisé en ce que**
le deuxième résonateur présente deux paires (25, 26) d'électrodes (21, 22) écartées dans l'espace.

9. Capteur selon la revendication 7,
**caractérisé en ce que**
le deuxième résonateur (5) présente une paire (27) d'électrodes (21, 22) destinée à exciter et à prélever une onde de surface et des électrodes de réflexion (23) placées à distance de la paire d'électrodes (27).

10. Système de capteurs comportant un grand nombre de capteurs selon l'une des revendications précédentes, au moins une unité d'interrogation pour envoyer un signal radio d'interrogation aux capteurs et pour recevoir un signal radio de réponse provenant des capteurs,
**caractérisé en ce que**
les premiers résonateurs (5) présentent chacun des zones différentes de fréquence de résonance.

11. Système de capteurs selon la revendication 10,
**caractérisé en ce qu'**
à chaque unité d'interrogation sont associés une première fréquence porteuse (f_{T}) spécifique du signal radio d'interrogation et au moins un capteur dont le deuxième résonateur (5) peut être excité sélectivement par la fréquence porteuse (f_{T}) spécifique.

12. Unité d'interrogation pour un capteur selon l'une des revendications 1 à 9 ou pour un système de capteurs selon la revendication 10 ou 11,
**caractérisée en ce qu'**
elle présente des oscillateurs (13, 14) destinés à produire un signal radio d'interrogation qui comprend pour une deuxième fréquence (f_{T}) un signal porteur d'interrogation modulé avec un signal de mesure d'interrogation d'une première fréquence (f_{M}) et une antenne (11) commune pour émettre le signal radio d'interrogation et pour recevoir un signal radio de réponse provenant d'un des capteurs, l'unité d'interrogation interrompant l'émission du signal radio d'interrogation afin de recevoir le signal radio de réponse.

13. Unité d'interrogation selon la revendication 12,
**caractérisée en ce que**
l'on peut faire varier la fréquence du signal porteur d'interrogation (f_{T}).

14. Procédé pour enregistrer à distance une grandeur de mesure en utilisant le capteur selon l'une des revendications 1 à 9 ou le système de capteurs selon la revendication 10 ou 11, pour lequel les deux oscillateurs (3, 5) d'un capteur sont excités par un signal radio d'interrogation qui comprend pour une deuxième fréquence (f_{T}) un signal porteur d'interrogation modulé avec un signal de mesure d'interrogation d'une première fréquence (f_{M}) et un signal radio de réponse émis par le capteur est reçu et exploité, lequel signal radio de réponse comprend un signal porteur de réponse pour la fréquence de résonance du deuxième oscillateur (3) modulé avec un signal de mesure de réponse pour la fréquence de résonance du premier oscillateur (5), l'émission du signal porteur d'interrogation étant interrompue pour recevoir le signal radio de réponse.

15. Procédé selon la revendication 14,
**caractérisé en ce que**
le signal radio d'interrogation et le signal de mesure de réponse sont envoyés ou reçus par l'intermédiaire de la même antenne (11).

16. Procédé selon la revendication 14 ou 15,
**caractérisé en ce que**
la fréquence du signal de mesure d'interrogation est modifiée lorsqu'aucun signal de mesure de réponse suffisant n'est reçu.
